(19) **Europäisches Patentamt / European Patent Office / Office européen des brevets**

(11) **EP 1 834 500 B1**

(12) **FASCICULE DE BREVET EUROPEEN**

(45) Date de publication et mention
de la délivrance du brevet:
**14.05.2008 Bulletin 2008/20**

(21) Numéro de dépôt: **05850611.4**

(22) Date de dépôt: **23.12.2005**

(51) Int Cl.:
***H04Q 7/38*** *(2006.01)*

(86) Numéro de dépôt international:
**PCT/FR2005/003275**

(87) Numéro de publication internationale:
**WO 2006/072697 (13.07.2006 Gazette 2006/28)**

(54) **PROCEDE DE MESURE D'UNE DISTANCE ENTRE DEUX EQUIPEMENTS DE RADIOCOMMUNICATION, ET EQUIPEMENT ADAPTE POUR METTRE EN OEUVRE UN TEL PROCEDE**

VERFAHREN ZUR MESSUNG EINER DISTANZ ZWISCHEN ZWEI FUNKKOMMUNIKATIONSGERÄTEN UND FÜR DIE IMPLEMENTIERUNG EINES SOLCHEN VERFAHRENS AUSGELEGTE EINRICHTUNG

METHOD OF MEASURING A DISTANCE BETWEEN TWO RADIO-COMMUNICATION DEVICES AND DEVICE ADAPTED TO IMPLEMENT ONE SUCH METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **03.01.2005 FR 0500015**

(43) Date de publication de la demande:
**19.09.2007 Bulletin 2007/38**

(73) Titulaire: **France Télécom**
**75015 Paris (FR)**

(72) Inventeurs:
• **MISCOPEIN, Benoît**
  **F-38000 Grenoble (FR)**
• **SCHWOERER, Jean**
  **F-38000 GRENOBLE (FR)**

• **EVENNOU, Frédéric**
  **F-38100 Grenoble (FR)**

(74) Mandataire: **Cabinet Plasseraud**
**52 rue de la Victoire**
**75440 Paris Cedex 09 (FR)**

(56) Documents cités:
**WO-A-02/063327          WO-A-03/019826**
**US-A1- 2002 118 723**

• **CAFFERY J J ET AL: "OVERVIEW OF RADIOLOCATION IN CDMA CELLULAR SYSTEMS" IEEE COMMUNICATIONS MAGAZINE, IEEE SERVICE CENTER. PISCATAWAY, N.J, US, vol. 36, no. 4, avril 1998 (1998-04), pages 38-45, XP000752569 ISSN: 0163-6804**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 834 500 B1

**Description**

La présente invention concerne un procédé de mesure d'une distance entre deux équipements de radiocommunication, ainsi qu'un équipement adapté pour mettre en oeuvre un tel procédé.

Il est souvent utile de connaître la position d'un équipement de radiocommunication. C'est le cas, notamment, lorsque des informations contextuelles, c'est-à-dire dont la pertinence dépend de l'endroit où se trouve l'utilisateur de l'équipement, doivent être transmises. C'est aussi le cas lorsqu'un équipement mobile de radiocommunication est relié à un réseau maillé ou à un réseau «ad hoc» qui utilise un algorithme de routage basé sur la position de l'équipement mobile. On entend par réseau «ad hoc» un réseau de transmission capable de prendre en compte des modifications de celui-ci d'une façon autonome, c'est-à-dire sans intervention extérieure. Des réseaux radio déployés pour déterminer la position d'équipements mobiles ayant des étiquettes électroniques individuelles, ou pour guider un porteur d'un équipement mobile dans un site déterminé sont d'autres exemples d'applications auxquelles l'invention peut être appliquée.

Plusieurs méthodes existent déjà, qui permettent de déterminer l'endroit où se trouve un équipement de radiocommunication. Parmi celles-ci, les méthodes par triangulation nécessitent de mémoriser une carte de stations radio de référence dont les positions sont répertoriées. D'autres méthodes sont basées sur la mesure de la puissance de réception d'un signal radio, mais elles nécessitent de mettre en oeuvre une échelle de puissances d'émission radio étalonnées. De telles méthodes requièrent par conséquent des moyens de mémorisation, de mesure et/ou de contrôle qui sont complexes.

Il est aussi connu d'estimer une distance entre deux équipements de radiocommunication en déterminant une durée de propagation de signaux radio transmis entre ceux-ci. Une telle durée est appelée temps de vol, ou «time of flight» en anglais, et est déterminée de la façon suivante :

- un premier équipement émet un signal radio de requête de mesure de distance et déclenche simultanément un chronomètre interne à cet équipement ;
- un second équipement reçoit le signal de requête et, après un délai intermédiaire connu des deux équipements, envoie un signal radio d'accusé de réception au premier équipement ; et
- le premier équipement interrompt le chronométrage lorsqu'il reçoit le signal d'accusé de réception.

La distance entre les deux équipements est alors estimée en soustrayant le délai intermédiaire de la durée chronométrée, et en divisant la durée résiduelle obtenue par deux fois la vitesse de propagation des signaux radio. Un tel procédé de mesure d'une distance entre deux équipements de radiocommunication est divulgué dans le document WOO2/063327. Une telle méthode d'estimation de la distance est relativement exacte lorsque les deux équipements sont éloignés l'un de l'autre, et lorsque les signaux radio se propagent en ligne droite entre ceux-ci. Mais, lorsque les deux équipements sont assez proches l'un de l'autre, la précision d'une estimation de la distance ainsi obtenue est fortement affectée par une incertitude portant sur le délai intermédiaire entre la réception de la requête par le second équipement et l'émission du signal d'accusé de réception par celui-ci.

En outre, lorsqu'il existe plusieurs chemins de propagation entre les deux équipements, c'est-à-dire en cas de diversité spatiale, la distance estimée ne correspond pas nécessairement à la distance entre les deux équipements qui est mesurée en ligne droite. Elle correspond le plus souvent au chemin de propagation qui est suivi par une partie principale de l'énergie des signaux radio transmis. Lorsqu'une partie importante de l'énergie des signaux radio subit au moins une réflexion entre les deux équipements, le résultat de l'estimation de distance qui est obtenu peut être très supérieur à la valeur réelle de la distance entre les deux équipements, qui est mesurée en ligne droite.

Pour obtenir une estimation de la distance en ligne droite qui sépare deux équipements, des trames de sondage de canal sont utilisées pour chacun des signaux de requête et d'accusé de réception qui sont transmis pour déterminer le temps de vol des signaux radio. De telles trames de sondage de canal sont bien connues. Leur structure permet de déterminer des différences entre des temps de vol de signaux radio qui suivent des chemins de propagation distincts. Elle permet aussi de détecter le plus court des chemins de propagation suivis à partir de l'équipement émetteur par une partie de l'énergie du signal radio. La distance est alors estimée d'après le temps de vol des signaux de requête et d'accusé de réception qui correspond au chemin de propagation le plus court entre les deux équipements. Pour la plupart des configurations de milieu de propagation, le résultat obtenu correspond à la mesure de la distance en ligne droite. Tous les événements ultérieurs qui interviennent au sein de chaque équipement pour la communication concernée sont alors repérés par rapport à la durée de propagation la plus courte entre les deux équipements radio.

Or une trame de sondage de canal est particulièrement longue, en comparaison avec une trame de communication. Par conséquent, une méthode de mesure de distance basée sur un échange de trames de sondage de canal tel que décrit ci-dessus, présente les inconvénients suivants :

- deux trames de sondage de canal sont émises au total, ce qui correspond à une quantité d'énergie importante consommée dans les équipements de radiocommunication. Une telle consommation d'énergie est pénalisante dans le cas d'équipements mobiles autonomes en alimentation énergétique ;

- chaque trame de sondage de canal nécessite un temps important de construction et de transmission de celle-ci. Si l'équipement auquel une telle trame est destinée n'est pas disponible, l'énergie consommée dans l'équipement émetteur et la ressource radio utilisée pour transmettre la trame sont perdues ;

- le délai intermédiaire entre la réception de la trame de requête et l'émission de la trame d'accusé de réception doit être supérieur à la durée de construction de la trame de sondage de canal qui est utilisée pour le signal d'accusé de réception. Il est donc long, ce qui engendre une imprécision dans l'estimation de la distance entre les deux équipements lorsque l'horloge interne de l'un au moins des deux équipements est susceptible de dériver. Une telle imprécision peut engendrer une erreur importante dans l'estimation du temps de vol pour deux équipements radio proches l'un de l'autre ;

- pour permettre la mesure du temps de vol des trames, le terminal récepteur de la trame de requête mobilise d'autorité la ressource radio à l'expiration du délai intermédiaire pour transmettre la trame d'accusé de réception. Une telle préemption de la ressource radio doit intervenir à l'issue dudit délai intermédiaire, avec un retard maximal de l'ordre de la nanoseconde, seulement. Pour cela, d'autres communications faisant intervenir l'équipement émetteur de la trame d'accusé de réception doivent être éventuellement interrompues. Il en résulte une perturbation d'autant plus importante que la trame d'accusé de réception est longue ;

- enfin, la communication est poursuivie d'après des signaux radio reçus par chaque équipement qui suivent le chemin de propagation le plus court. Ces signaux peuvent correspondre à une énergie de réception beaucoup plus faible que celle de signaux transmis par un autre chemin de propagation. La communication présente alors un niveau de sûreté inférieur à celui qui résulterait de l'utilisation de signaux radio reçus avec une énergie supérieure.

Il serait possible de pallier ce dernier inconvénient en disposant deux récepteurs au sein de chaque équipement radio. Le premier récepteur pourrait être synchronisé d'après les signaux radio reçus qui correspondent au chemin de propagation le plus court, et le second récepteur pourrait être synchronisé d'après les signaux radio qui présentent la plus grande énergie à la réception. Mais l'équipement serait alors complexe et posséderait une consommation énergétique élevée.

Un but de la présente invention consiste donc à proposer un procédé de mesure de la distance entre deux équipements de radiocommunication pour lequel les inconvénients cités ci-dessus sont réduits.

Pour cela, l'invention propose un procédé de mesure d'une distance entre deux équipements de radiocommunication, qui comprend les étapes suivantes :

a- par un premier des deux équipements : émission d'un signal radio de requête de mesure d'un délai d'échange entre les deux équipements ;
b- par le second équipement : réception du signal de requête et, après un délai intermédiaire connu des deux équipements, envoi d'un signal radio d'accusé de réception ; et
c- par le premier équipement :

- réception du signal d'accusé de réception ;
- mesure de la durée entre l'émission du signal de requête et la réception du signal d'accusé de réception, puis mémorisation de ladite durée comme délai d'échange ; et
- calcul d'un premier temps de vol des signaux de requête et d'accusé de réception à partir du délai d'échange et du délai intermédiaire.

En outre, le procédé comprend une émission, par le second équipement, d'une trame de sondage de canal adaptée de sorte que le premier équipement détermine, à partir de différents signaux radio reçus correspondant à la trame de sondage de canal, une différence de temps de vol entre un chemin de propagation correspondant audit premier temps de vol et le chemin de propagation le plus court suivi par des signaux radio transmis entre les deux équipements. Le premier équipement calcule ensuite un second temps de vol à partir du premier temps de vol et de la différence de temps de vol.

Ainsi, un procédé selon l'invention comprend deux phases distinctes. La première phase consiste en la mesure de la durée entre l'émission du signal de requête et la réception du signal d'accusé de réception par le premier équipement. En fixant d'une façon appropriée un seuil de détection d'énergie, la synchronisation du premier équipement lors d'une réception ultérieure de signaux émis par le second équipement peut être effectuée sur un chemin de propagation entre les deux équipements qui est suivi par une partie importante, voire la partie principale, de l'énergie des signaux radio transmis de requête et/ou d'accusé de réception. Ainsi, la mesure de la durée entre l'émission du signal de requête et la réception du signal d'accusé de réception peut être effectuée avec un premier équipement synchronisé sur le chemin de propagation entre les deux équipements qui est suivi par une partie importante, voire la partie principale, de l'énergie

EP 1 834 500 B1

des signaux radio transmis. En particulier, une transmission de données entre les deux équipements peut ainsi être basée sur des signaux reçus avec une énergie importante. Elle est alors plus sûre et plus fiable.

Eventuellement, la longueur du chemin de propagation qui est associé à la durée d'échange mémorisée peut être estimée en calculant le temps de vol correspondant des signaux. Elle constitue une première estimation de la distance entre les deux équipements.

Lors de la première phase du procédé, les signaux radio de requête de mesure du délai d'échange et d'accusé de réception sont avantageusement courts. En particulier, l'un au moins de ces signaux peut comprendre une trame courte, et notamment plus courte qu'une trame de sondage de canal. Ce signal radio peut alors être rapidement construit et transmis par l'équipement correspondant, avec une consommation d'énergie pendant ces étapes et une mobilisation de ressources radio qui sont réduites.

En outre, une construction plus rapide du signal d'accusé de réception permet d'utiliser un délai intermédiaire court, entre la réception du signal de requête et l'émission du signal d'accusé de réception par le second équipement. La détermination du temps de vol de l'étape c est donc plus précise, même si l'horloge interne de l'un des équipements est susceptible de dériver. Cette précision supérieure concerne en particulier les situations selon lesquelles les deux équipements sont relativement proches l'un de l'autre.

Un autre avantage résulte de la longueur réduite du signal d'accusé de réception. Pour obtenir une mesure précise du délai d'échange, le message d'accusé de réception est émis par le second équipement en mobilisant d'autorité la ressource radio, c'est-à-dire sans utiliser le gestionnaire d'accès multiple du second équipement. La perturbation d'autres communications faisant intervenir le second équipement est alors d'autant plus faible que cette mobilisation est de courte durée.

La seconde phase du procédé permet de déterminer le temps de vol. des signaux radio transmis selon le chemin de propagation le plus court entre les deux équipements, à partir de la durée d'échange mémorisée lors de la première phase. Cette seconde phase ne requiert la construction et l'émission que d'une unique trame de sondage de canal, exécutées par le second équipement. Le rôle du premier équipement est alors limité à l'analyse de la trame de sondage de canal qu'il reçoit. L'énergie totale consommée dans les deux équipements pour déterminer la distance de séparation entre ceux-ci est donc réduite.

Pour la plupart des configurations du milieu de transmission radio présent entre les deux équipements, le temps de vol le plus court identifié par le premier équipement d'après la trame de sondage de canal correspond à une propagation en ligne droite. La longueur de la distance de séparation entre les deux équipements, mesurée en ligne droite, peut alors être calculée en divisant le temps de vol le plus court identifié par la vitesse de propagation des signaux radio.

La seconde phase d'un procédé selon l'invention, c'est-à-dire la détermination du temps de vol correspondant au chemin de propagation le plus court, n'est pas nécessairement exécutée immédiatement après la première phase. Elle peut être exécutée avec un délai d'attente après celle-ci, à condition que le canal de transmission radio demeure stationnaire entre les deux phases du procédé. Le canal est dit stationnaire lorsque les deux équipements restent sensiblement immobiles et lorsque le milieu de transmission dans lequel se propagent les signaux radio présente des caractéristiques sensiblement constantes. A titre d'illustration, la trame de sondage de canal peut être émise par le second équipement une dizaine de millisecondes après l'émission du signal d'accusé de réception, en fonction de la disponibilité du canal d'émission de la trame de sondage de canal. On peut ainsi réduire la perturbation provoquée pour d'autres communications faisant intervenir le second équipement, en attendant que le gestionnaire d'accès multiple du second équipement indique qu'un intervalle de temps suffisant est disponible pour transmettre la trame de sondage de canal.

Enfin, lorsque le second équipement n'est pas en condition pour procéder à la mesure de distance, il n'émet pas la trame de sondage de canal. Aucune ressource radio ni quantité d'énergie importantes ne sont alors consommées inutilement. Des raisons pour lesquelles le second équipement n'est pas en condition pour procéder à la mesure de distance sont, par exemple, que celui-ci se trouve hors de portée radio de l'équipement émetteur de la requête de mesure, ou que le second équipement ne possède pas tous les composants nécessaires à la mise en oeuvre du procédé de mesure, ou encore qu'il ne dispose pas de tous les paramètres nécessaires à cette mise en oeuvre.

L'invention concerne en outre un équipement de radiocommunication adapté pour mettre en oeuvre les étapes exécutées par le premier et/ou le second des deux équipements d'un procédé de mesure de distance entre deux équipements tel que décrit précédemment.

Elle concerne encore un système de communication comprenant au moins deux tels équipements. La distance de séparation entre ces deux équipements peut être déterminée avec un niveau de précision et une exactitude supérieure. On entend par exactitude le fait que la longueur du chemin de propagation qui est estimée corresponde effectivement à une mesure en ligne droite de la distance entre les deux équipements. En outre, des communications véhiculées dans un tel système sont interrompues moins fréquemment pour mesurer des délais d'échange en mobilisant de façon autoritaire des ressources radio.

D'autres particularités et avantages de la présente invention apparaîtront dans la description ci-après d'un exemple de mise en oeuvre non limitatif, en référence aux dessins annexés, dans lesquels :

4

- la figure 1 illustre un système de radiocommunication destiné à mettre en oeuvre un procédé selon l'invention ; et

- la figure 2 est un diagramme chronologique des différentes étapes d'un procédé selon l'invention.

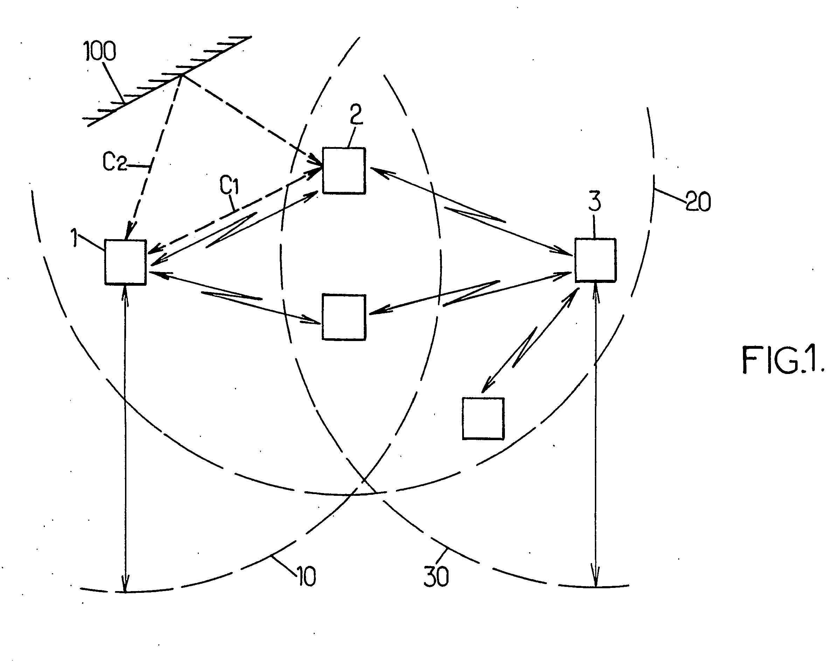

Conformément à la figure 1, un système de communication comprend un ensemble d'équipements émetteurs-récepteurs radio, dont trois de ceux-ci sont référencés 1, 2 et 3. Chaque émetteur-récepteur peut constituer l'interface radio d'un capteur faisant partie d'un système de gestion domotique, par exemple. Pour une telle application, certains capteurs peuvent être dédiés à des mesures thermiques, d'autres au repérage de l'état d'unités de contrôle d'éléments dé chauffage, etc. Il peut s'agir d'un système «ad hoc», qui gère lui-même les séquences de communication entre les différents capteurs. Ce peut être, notamment, un système de type Bluetooth connu de l'Homme du métier. Les courbes 10, 20 et 30 marquées en pointillés sur la figure indiquent schématiquement les limites des portées respectives des équipements 1, 2 et 3. Ainsi, l'équipement 2 peut communiquer avec chacun des équipements 1 et 3, alors que ces derniers sont hors de portée radio l'un de l'autre.

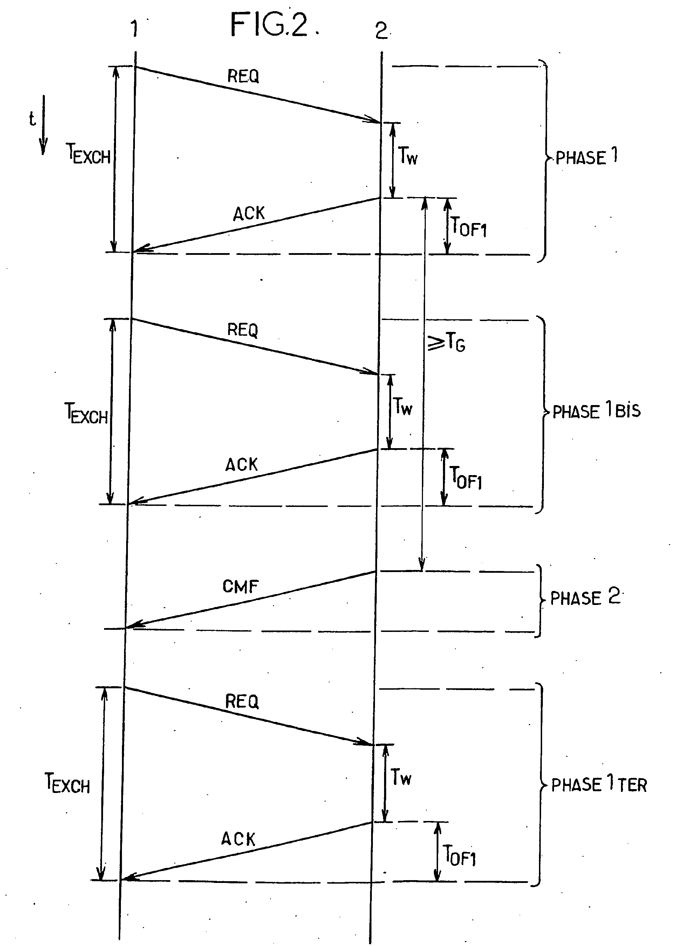

La figure 2 indique les différentes actions exécutées au sein des équipements 1 et 2 lorsque l'équipement 1 initie une communication radio avec l'équipement 2. L'axe vertical descendant correspond à une coordonnée temporelle, notée t. En premier lieu, l'équipement 1 envoie une requête, notée REQ, à destination de l'équipement 2. Cette requête peut posséder une double fonction. Elle peut indiquer à l'équipement 2 qu'une communication est sollicitée par l'équipement 1. En outre, si la communication est acceptée par l'équipement 2, la requête REQ initie une mesure du délai d'échange de signaux radio transmis entre les équipements 1 et 2.

L'équipement 1 repère l'instant d'émission des signaux radio de la requête REQ par rapport à une horloge interne à cet équipement. Il mémorise alors cet instant.

Lorsque l'équipement 2 reçoit la requête REQ, il peut soit refuser la communication, soit l'accepter. S'il l'accepte, il répond en adressant un signal d'accusé de réception ACK à l'équipement 1. La détection et la réception des signaux radio par chacun des équipements 1 et 2 sont exécutées d'une façon connue et non reprise ici.

L'équipement 2 transmet le signal ACK après une durée d'attente déterminée, comptée à partir de la réception de la requête REQ. Cette durée d'attente est fixée par le constructeur des équipements et mémorisée au sein de chacun d'eux. Elle est notée $T_W$ et appelée délai intermédiaire. Elle permet principalement à un équipement qui reçoit une requête alors qu'il est en mode de veille au moment de la réception, de passer en mode d'émission. En outre, la trame du signal ACK est préparée pendant le délai $T_W$.

Le signal ACK est transmis sans faire appel au gestionnaire d'accès multiple de l'équipement 2. Autrement dit, à la fin du délai intermédiaire $T_W$, l'équipement 2 interrompt toute émission ou réception de signaux radio éventuellement en cours pour émettre le signal ACK. Une telle interruption d'émission ou de réception peut concerner une communication entre l'équipement 2 et l'équipement 3, par exemple. De cette façon, la durée entre la réception de la requête REQ et l'émission du signal ACK par l'équipement 2 est connue avec précision par l'équipement 1 : elle est égale au délai $T_W$. Il peut être nécessaire d'interrompre toute communication éventuellement en cours entre les équipements 2 et 3 car, à cause des portées limitées 10 et 30 des équipements 1 et 3, l'équipement 1 ne peut détecter l'existence d'une telle communication en cours pour connaître l'instant d'émission du signal ACK par l'équipement 2.

Lorsque l'équipement 1 reçoit le signal radio ACK, il repère l'instant de cette réception par rapport à son horloge interne. Il détermine alors la durée écoulée depuis l'instant mémorisé de l'émission de la requête REQ, jusqu'à l'instant de réception du signal ACK. Cette durée est appelée durée d'échange de signaux radio entre les équipements 1 et 2, et notée $T_{EXCH}$. Elle est mémorisée au sein de l'équipement 1 pour synchroniser l'équipement 1 par rapport à des signaux radio de communication transmis ultérieurement par l'équipement 2.

L'équipement 1 calcule alors un temps de vol $T_{OF1}$ ($T_{OF}$ pour «Time Of Flight » en anglais) des signaux REQ et ACK selon la formule (1) suivante :

$$T_{OF1} = 0,5 \times (T_{EXCH} - T_W) \tag{1}$$

Une longueur des chemins parcourus par les signaux REQ et ACK peut en outre être calculée, en divisant $T_{OF1}$ par la vitesse de propagation des signaux radio entre les équipements du système. Cette vitesse est égale à $3.10^8$ m.s$^{-1}$.

L'un au moins des signaux radio de requête REQ et d'accusé de réception ACK peut comprendre une trame de communication. Ces signaux sont alors courts, en particulier lorsqu'ils ne comportent pas de charge utile («payload» en anglais). Dans ce cas, leur traitement au sein de chacun des équipements 1 et 2 peut être effectué au plus proche de la couche physique. Ce traitement est alors rapide et n'engendre qu'une faible consommation d'énergie dans chaque équipement.

En outre, la courte longueur du signal ACK réduit le risque de perturbation d'éventuelles communications entre les équipements 2 et 3. Eventuellement, elle peut aussi permettre de réduire le délai intermédiaire $T_W$, de sorte que la mesure du délai d'échange $T_{EXCH}$ est moins affectée par une dérive de l'horloge interne de l'un des deux équipements 1 et 2.

L'échange des signaux REQ et ACK et le calcul de $T_{OF1}$ constituent la première phase du procédé de mesure de la distance entre les équipements 1 et 2. Cette première phase correspond aux étapes a à c introduites dans la partie générale de la description, et est notée phase 1 sur la figure 2.

Eventuellement, la phase 1 du procédé peut être répétée (phase 1 bis indiquée sur la figure 2). A chaque nouvelle exécution de la phase 1, le temps de vol $T_{OF1}$ est actualisé. Eventuellement, le temps de vol $T_{OF1}$ calculé lors d'une répétition de la phase 1 peut prendre en compte plusieurs des délais d'échange mémorisés lors d'exécutions antérieures de la phase 1. Par exemple, le délai d'échange utilisé dans la formule (1) peut être une moyenne des délais d'échanges mémorisés. L'estimation de $T_{OF1}$ qui en résulte est plus précise.

Une différence entre des valeurs de $T_{OF1}$ obtenues lors de deux exécutions successives de la phase 1 peut indiquer que le canal de transmission n'est pas stationnaire. La phase 1 peut alors être répétée de nouveau jusqu'à obtenir des valeurs successives de $T_{OF1}$ sensiblement identiques, qui indiquent que le canal est devenu stationnaire. Dans ce cas, le procédé est poursuivi à partir des dernières valeurs de $T_{OF1}$ qui indiquent que le canal est stationnaire.

Le chemin de propagation suivi par les signaux REQ et ACK peut soit relier les équipements 1 et 2 en ligne droite (chemin C1 indiqué sur la figure 1), soit les relier avec au moins une réflexion intermédiaire. Le chemin C2 indiqué sur la figure 1 présente une réflexion sur une paroi 100, par exemple en métal. Du fait de cette réflexion, le chemin C2 est plus long que le chemin C1. Le temps de vol $T_{OF1}$ correspond en général à celui des chemins de propagation C1 et C2 qui est suivi par une partie principale de l'énergie des signaux radio REQ et ACK.

La seconde phase du procédé de mesure de la distance entre les équipements 1 et 2 est alors exécutée (phase 2 sur la figure 2). L'équipement 2 transmet une trame de sondage de canal, notée CMF pour «Channel Measurement Frame» en anglais, à destination de l'équipement 1. Dans une variante avantageuse de l'invention, cette transmission de la trame CMF est exécutée en respectant l'accès multiple au sein de l'équipement 2. Pour cela, la trame 2 est transmise lorsque le gestionnaire d'accès multiple de l'équipement 2 identifie la possibilité de disposer d'un temps de transmission suffisant par le canal utilisé pour le signal ACK. L'équipement 1 analyse alors l'ensemble des signaux radio reçus qui correspondent à la trame CMF. La structure d'une trame de sondage de canal, ainsi que le mode d'analyse de celle-ci sont supposés connus, et ne sont pas repris en détail ici. L'équipement 1 identifie tout d'abord une première partie de signal radio reçu comme correspondant à une portion de la trame CMF qui a suivi le même chemin de propagation que le signal d'accusé de réception ACK de la phase 1. Cette identification peut résulter d'une comparaison entre le niveau d'énergie de la première partie de signal, reçu correspondant à la portion de trame CMF et celui du signal ACK reçu. L'équipement 1 recherche ensuite si une seconde partie de signal radio reçu ne correspond pas aussi à une portion de la trame CMF, qui a suivi un chemin de propagation plus court que celui de la première partie de signal radio. Cette recherche est exécutée en combinant une sélection de parties du signal radio reçu par l'équipement 1, effectuée au moyen d'un seuil d'énergie de réception variable, et une reconnaissance de portions de trame CMF. L'équipement 1 en déduit une différence de temps de vol entre le chemin de propagation suivi par le signal ACK et un chemin plus court dont l'existence est détectée d'après le signal radio reçu correspondant à la trame CMF. Cette différence est notée $\Delta T_{OF}$.

Lorsque plusieurs chemins plus courts que celui suivi par le signal ACK sont détectés, l'équipement 1 sélectionne celui d'entre eux qui est le plus court, c'est-à-dire qui est associé à la valeur de $\Delta T_{OF}$ la plus grande.

L'équipement 1 calcule ensuite le temps de vol des signaux transmis entre les deux équipements 1 et 2 selon le chemin de propagation le plus court par la formule (2) ci-dessous. Ce temps du vol selon le chemin le plus court est noté $T_{OF2}$.

$$T_{OF2} = T_{OF1} - \Delta T_{OF} \qquad\qquad (2)$$

$T_{OF2}$ est une mesure de la longueur du chemin de propagation le plus court. Cette longueur peut être exprimée en mètres, en divisant $T_{OF2}$ par la vitesse de propagation des signaux radio entre les équipements du système. Elle correspond le plus souvent, de même que $T_{OF2}$, à une propagation en ligne droite des signaux radio entre les équipements 1 et 2 (chemin C1 sur la figure 1).

Il est possible que le chemin de propagation suivi par le signal ACK de la phase 1 soit celui qui est le plus court. Dans ce cas, l'analyse des signaux radio reçus par l'équipement 1 qui correspondent à la trame de sondage de canal CMF ne révèle aucun chemin encore plus court. La phase 2 aboutit alors à une valeur nulle de $\Delta T_{OF}$.

La phase 2 du procédé peut donc ne comprendre qu'une unique mesure de canal. La phase 1, puisqu'elle n'en comprend aucune, peut être exécutée rapidement.

Selon un premier perfectionnement de l'invention, le procédé peut comprendre en outre l'émission, par l'équipement 1 à destination de l'équipement 2, d'un signal comprenant une indication du temps de vol $T_{OF2}$. De telles indications sont, par exemple, la valeur du temps de vol $T_{OF2}$, ou la distance calculée à partir de cette valeur. La valeur de la distance mesurée qui sépare les deux équipements 1 et 2 est alors disponible au sein de chacun des deux équipements. Eventuellement, l'indication du temps de vol $T_{OF2}$ peut aussi être communiquée à d'autres équipements du système, ou seulement à certains de ceux-ci situés à portée de transmission radio de l'équipement 1.

Selon un deuxième perfectionnement de l'invention, la phase 1 du procédé peut être exécutée de nouveau après la détermination de la différence $\Delta T_{OF}$ entre le temps de vol $T_{OF1}$ calculé lors de la phase 1 et le temps de vol $T_{OF2}$ correspondant au chemin de propagation le plus court suivi par des signaux radio entre les deux équipements (phase 1ter indiquée sur la figure 2). Une nouvelle valeur de $T_{OF1}$ est ainsi obtenue, qui est comparée à celle obtenue lors d'une exécution antérieure de la phase 1. Il est ainsi possible de vérifier que le canal de transmission radio entre les équipements 1 et 2 est resté stationnaire pendant tout le procédé. En particulier, une indication sur la précision de la détermination de $T_{OF1}$ peut être obtenue. Notamment, lorsque le canal n'est pas resté stationnaire, il est possible d'indiquer que la précision de cette détermination est compromise, et même, éventuellement, à quel degré est-elle compromise. Un intérêt peut être de commander une nouvelle exécution de la détermination de $T_{OF1}$ si ce degré est supérieur à un seuil prédéfini.

Selon un troisième perfectionnement de l'invention, la trame de sondage de canal CMF est émise par l'équipement 2 après le signal d'accusé de réception ACK, avec une durée d'attente à partir de l'émission du signal d'accusé de réception qui est supérieure ou égale à un temps de garde déterminé. Ce temps de garde est noté $T_G$ sur la figure 2. Il permet notamment de garantir que l'équipement 1 dispose d'un temps suffisant pour calculer $T_{OF1}$ avant d'analyser les signaux radio reçus qui correspondent à la trame CMF. Ainsi, la valeur de $T_{OF1}$, et d'autres valeurs produites lors de la phase 1 du procédé telles que le niveau d'énergie de réception du signal ACK, sont disponibles au sein de l'équipement 1 lors de l'exécution de la phase 2. La durée entre l'émission du signal ACK et celle de la trame CMF par l'équipement 2 est égale à la somme du temps de garde $T_G$ et d'un délai dû au respect de l'accès multiple pour l'équipement 2. La valeur de $T_G$ est enregistrée au sein de chaque équipement du système lors de la fabrication ou lors d'une initialisation de celui-ci. Elle ne doit pas être trop élevée, afin que le canal utilisé pour communiquer entre les deux équipements puisse être considéré comme stationnaire entre les phases 1 et 2 du procédé, même lorsque l'un des équipements 1 ou 2 se déplace ou bien si le milieu de transmission radio varie de façon modérée. A titre d'exemple, $T_G$ peut être de l'ordre de 10 millisecondes. Dans ce cas, la phase 1 du procédé peut être répétée avant que le temps de garde soit écoulé à partir de l'émission du premier signal ACK par l'équipement 2. Ainsi, la détermination du temps de $T_{OF2}$ n'est pas retardée par l'obtention de plusieurs valeurs successives de $T_{OF1}$, pour augmenter la précision de détermination de $T_{OF1}$ et/ou pour vérifier que le canal est stationnaire. A chaque exécution de la phase 1, la valeur de $T_{OF1}$ peut être actualisée.

La trame de sondage de canal CMF constitue en général un signal radio relativement long. La construction de cette trame par l'équipement 2 et la mesure de canal effectuée par l'équipement 1 sont donc aussi longues. Il est alors possible que les horloges internes des équipements 1 et/ou 2 dérivent pendant le procédé. Pour limiter une erreur sur le résultat de la mesure de distance provoquée par une dérive de l'horloge interne de l'équipement 1, on peut repérer, par l'équipement 1, plusieurs premiers instants de réception de premiers signaux radio correspondant à la trame CMF qui ont suivi le même chemin de propagation que le signal ACK. Des seconds instants de réception de seconds signaux radio correspondant à la trame CMF et qui ont suivi d'autres chemins de propagation entre les équipements 1 et 2 sont alors repérés à partir de premiers instants de réception différents. Chaque second instant de réception peut ainsi être repéré par rapport à un premier instant de sorte que la durée écoulée entre ces deux instants soit courte. De cette façon, l'erreur sur la détermination de $\Delta T_{OF}$ qui résulterait d'une éventuelle dérive de l'horloge interne de l'équipement 1 est minimisée. L'erreur qui résulterait d'une dérive de l'horloge interne de l'équipement 2 est aussi réduite de cette façon.

Il est entendu que de nombreuses adaptations peuvent être introduites par rapport au procédé qui a été décrit en détail ci-dessus. En particulier, dans certaines circonstances, il peut être avantageux que l'équipement 2 transmette la trame de sondage de canal CMF avant que les étapes a à c soient exécutées.

Enfin, un procédé selon l'invention est particulièrement adapté pour un mode de transmission par impulsions, couramment désigné par transmission UWB, pour «Ultra Wide Band» en anglais. Mais, il peut aussi être appliqué à d'autres types de transmission radio, tels que le mode DS-SS, pour «Direct Sequence Spread Spectrum ».

**Revendications**

1. Procédé de mesure d'une distance entre deux équipements de radiocommunication (1, 2), comprenant les étapes suivantes :

   a- par un premier des deux équipements (1) : émission d'un signal radio (REQ) de requête de mesure d'un délai d'échange entre les deux équipements ;

b- par le second équipement (2) : réception du signal de requête et, après un délai intermédiaire ($T_W$) connu des deux équipements, envoi d'un signal radio d'accusé de réception (ACK) ; et

c- par le premier équipement (1) :

- réception du signal d'accusé de réception ;
- mesure de la durée ($T_{EXCH}$) entre l'émission du signal de requête (REQ) et la réception du signal d'accusé de réception (ACK), puis mémorisation de ladite durée comme délai d'échange ; et
- calcul d'un premier temps de vol ($T_{OF1}$) des signaux de requête et d'accusé de réception à partir du délai d'échange ($T_{EXCH}$) et du délai intermédiaire ($T_W$),

**caractérisé en ce que** le procédé comprend en outre une émission, par le second équipement (2), d'une trame de sondage de canal (CMF) adaptée de sorte que le premier équipement (1) :

- détermine, à partir de différents signaux radio reçus correspondant à la trame de sondage de canal, une différence de temps de vol ($\Delta T_{OF}$) entre un chemin de propagation correspondant audit premier temps de vol ($T_{OF1}$) et le chemin de propagation le plus court suivi par des signaux radio transmis entre les deux équipements (1, 2) ; et
- calcule un second temps de vol ($T_{OF2}$) à partir du premier temps de vol ($T_{OF1}$) et de la différence de temps de vol ($\Delta T_{OF}$).

2. Procédé selon la revendication 1, suivant lequel l'un au moins des signaux radio de requête (REQ) et d'accusé de réception (ACK) comprend une trame courte.

3. Procédé selon la revendication 1 ou 2, suivant lequel le chemin de propagation correspondant au premier temps de vol ($T_{OF1}$) est suivi par une partie principale de l'énergie du signal radio de requête (REQ) et/ou du signal d'accusé de réception (ACK).

4. Procédé selon l'une quelconque des revendications précédentes, comprenant en outre une émission, par le premier équipement (1) à destination du second équipement (2), d'un signal comprenant une indication du second temps de vol ($T_{OF2}$).

5. Procédé selon l'une quelconque des revendications précédentes, suivant lequel les étapes a à c sont répétées, et suivant lequel le premier temps de vol ($T_{OF1}$) est actualisé à chaque exécution des étapes a à c.

6. Procédé selon la revendication 5, suivant lequel les étapes a à c sont répétées après la détermination de la différence entre les premier et second temps de vol ($\Delta T_{OF}$).

7. Procédé selon l'une quelconque des revendications précédentes, suivant lequel la trame de sondage de canal (CMF) est émise par le second équipement (2) après le signal d'accusé de réception (ACK), avec une durée d'attente à partir de l'émission du signal d'accusé de réception supérieure ou égale à un temps de garde déterminé ($T_G$).

8. Procédé selon les revendications 5 et 7, suivant lequel les étapes a à c sont répétées avant que le temps de garde ($T_G$) soit écoulé à partir de l'émission d'un premier signal d'accusé de réception (ACK) par le second équipement (2).

9. Procédé selon l'une quelconque des revendications précédentes, suivant lequel plusieurs premiers instants de réception sont repérés par le premier équipement (1), respectivement pour des premiers signaux radio correspondant à la trame de sondage de canal (CMF) qui ont suivi le même chemin de propagation que le signal d'accusé de réception (ACK), et suivant lequel des seconds instants de réception de second signaux radio correspondant à ladite trame et qui ont suivi d'autres chemins de propagation entre les deux équipements (1, 2) sont repérés par ledit premier équipement à partir de premiers instants de réception différents.

10. Equipement de radiocommunication (1) comprenant des moyens pour mettre en oeuvre celles des étapes du procédé de mesure de distance entre deux équipements selon l'une quelconque des revendications 1 à 9, qui sont exécutées par le premier des deux équipements.

11. Equipement de radiocommunication (2) comprenant des moyens pour mettre oeuvre celles des étapes du procédé de mesure de distance entre deux équipements selon l'une des revendications 1 à 9, qui sont exécutées par le second des deux équipements.

**12.** Système de communication comprenant au moins un équipement (1) selon la revendication 10 et un équipement (2) selon la revendication 11.

**Claims**

**1.** Method of measuring a distance between two radiocommunication devices (1, 2), comprising the following steps:

a- by a first of the two devices (1): transmission of a radio signal (REQ) requesting a measurement of an exchange delay between the two devices;

b- by the second device (2): reception of the request signal and, after an intermediate delay ($T_W$) known to both devices, the sending of an acknowledgement radio signal (ACK); and

c- by the first device (1):

- reception of the acknowledgement signal;
- measurement of the time ($T_{EXCH}$) between the transmission of the request signal (REQ) and the reception of the acknowledgement signal (ACK), then storage of said time as exchange delay; and
- calculation of a first time of flight ($T_{OF1}$) of the request and acknowledgement signals based on the exchange delay ($T_{EXCH}$) and the intermediate delay ($T_W$),

**characterized in that** the method also comprises a transmission, by the second device (2), of a channel sensing frame (CMF) adapted so that the first device (1):

- determines, from various radio signals received corresponding to the channel sensing frame, a difference in time of flight ($\Delta T_{OF}$) between a propagation path corresponding to said first time of flight ($T_{OF1}$) and the shortest propagation path followed by radio signals transmitted between the two devices (1, 2); and
- calculates a second time of flight ($T_{OF2}$) from the first time of flight ($T_{OF1}$) and the difference in time of flight ($\Delta T_{OF}$).

**2.** Method according to Claim 1, wherein at least one of the request (REQ) and acknowledgement (ACK) radio signals comprises a short frame.

**3.** Method according to Claim 1 or 2, wherein the propagation path corresponding to the first time of flight ($T_{OF1}$) is followed by a main part of the energy of the request radio signal (REQ) and/or of the acknowledgement signal (ACK).

**4.** Method according to any one of the preceding claims, also comprising a transmission, by the first device (1) to the second device (2), of a signal comprising an indication of the second time of flight ($T_{OF2}$).

**5.** Method according to any one of the preceding claims, wherein the steps a to c are repeated, and wherein the first time of flight ($T_{OF1}$) is updated each time the steps a to c are executed.

**6.** Method according to Claim 5, wherein the steps a to c are repeated after the difference between the first and second times of flight ($\Delta T_{OF}$) has been determined.

**7.** Method according to any one of the preceding claims, wherein the channel sensing frame (CMF) is transmitted by the second device (2) after the acknowledgement signal (ACK), with a waiting time from the transmission of the acknowledgement signal greater than or equal to a determined guard time ($T_G$).

**8.** Method according to Claims 5 and 7, wherein the steps a to c are repeated before the guard time ($T_G$) has elapsed from the transmission of a first acknowledgement signal (ACK) by the second device (2).

**9.** Method according to any one of the preceding claims, wherein several first reception instants are marked by the first device (1), respectively for first radio signals corresponding to the channel sensing frame (CMF) that have followed the same propagation path as the acknowledgement signal (ACK), and wherein second instants of reception of second radio signals corresponding to said frame and which have followed other propagation paths between the two devices (1, 2) are marked by said first device from first different reception instants.

**10.** Radiocommunication device (1) comprising means for implementing those steps of the method of measuring distance between two devices according to any one of Claims 1 to 9 that are carried out by the first of the two devices.

**11.** Radiocommunication device (2) comprising means for implementing those steps of the method of measuring distance between two devices according to one of Claims 1 to 9 that are carried out by the second of the two devices.

**12.** Communication system comprising at least one device (1) according to Claim 10 and one device (2) according to Claim 11.


**Patentansprüche**

**1.** Verfahren zum Messen eines Abstandes zwischen zwei Funkkommunikationsanlagen (1, 2), das die folgenden Schritte enthält:

a- durch eine erste der zwei Anlagen (1): Senden eines Funksignals (REQ) zum Anfordern des Messens einer Austauschverzögerung zwischen den zwei Anlagen;
b- durch die zweite Anlage (2): Empfangen des Anforderungssignals und nach einer bekannten Zwischenverzögerung ($T_W$) der zwei Anlagen Schicken eines Empfangsquittierungsfunksignals (ACK); und
c- durch die erste Anlage (1):

- Empfangen des Empfangsquittierungssignals;
- Messen der Dauer ($T_{EXCH}$) zwischen dem Senden des Anforderungssignals (REQ) und dem Empfang des Empfangsquittierungssignals (ACK), dann Speichern der Dauer als Austauschverzögerung; und
- Berechnen einer ersten Laufzeit ($T_{OF1}$) der Anforderungs- und Empfangsquittierungssignale anhand der Austauschverzögerung ($T_{EXCH}$) und der Zwischenverzögerung ($T_W$),

**dadurch gekennzeichnet, dass** das Verfahren außerdem das Senden eines Kanalkontrollrahmens (CMF) durch die zweite Anlage (2) enthält, wobei der Kanalkontrollrahmen (CMF) so beschaffen ist, dass die erste Anlage (1):

- anhand verschiedener empfangener Funksignale, die dem Kanalkontrollrahmen entsprechen, eine Laufzeitdifferenz ($\Delta T_{OF}$) zwischen dem der ersten Laufzeit ($T_{OF1}$) entsprechenden Ausbreitungsweg und dem kürzesten Ausbreitungsweg bestimmt, woraufhin Funksignale zwischen den zwei Anlagen (1, 2) gesendet werden; und
- eine zweite Laufzeit ($T_{OF2}$) anhand der ersten Laufzeit ($T_{OF1}$) und der Laufzeitdifferenz ($\Delta T_{OF}$) berechnet.

**2.** Verfahren nach Anspruch 1, wobei das Anforderungsfunksignal (REQ) und/oder das Empfangsquittierungsfunksignal (ACK) einen kurzen Rahmen enthalten.

**3.** Verfahren nach Anspruch 1 oder 2, wobei der Ausbreitungsweg, dem die erste Laufzeit ($T_{OF1}$) entspricht, ein Hauptteil der Energie des Anforderungsfunksignals (REQ) und/oder des Empfangsquittierungssignals (ACK) folgt.

**4.** Verfahren nach einem der vorhergehenden Ansprüche, das außerdem ein Senden eines Signals, das eine Angabe der zweiten Laufzeit ($T_{OF2}$) enthält, durch die erste Anlage (1) zu der zweiten Anlage (2) enthält.

**5.** Verfahren nach einem der vorhergehenden Ansprüche, wobei die Schritte a bis c wiederholt werden und wobei die erste Laufzeit ($T_{OF1}$) bei jeder Ausführung der Schritte a bis c aktualisiert wird.

**6.** Verfahren nach Anspruch 5, wobei die Schritte a bis c nach der Bestimmung der Differenz zwischen der ersten und der zweiten Laufzeit ($\Delta T_{OF}$) wiederholt werden.

**7.** Verfahren nach einem der vorhergehenden Ansprüche, wobei der Kanalkontrollrahmen (CMF) durch die zweite Anlage (2) nach dem Empfangsquittierungssignal (ACK) und mit einer Wartedauer beginnend beim Aussenden des Empfangsquittierungssignals, die größer oder gleich einer bestimmten Schutzzeit ($T_G$) ist, gesendet wird.

**8.** Verfahren nach den Ansprüchen 5 und 7, wobei die Schritte a bis c wiederholt werden, bevor die Schutzzeit ($T_G$), die bei einem Senden eines ersten Empfangsquittierungssignals (ACK) durch die zweite Anlage (2) beginnt, abgelaufen ist.

**9.** Verfahren nach einem der vorhergehenden Ansprüche, wobei durch die erste Anlage (1) mehrere erste Empfangszeitpunkte jeweils für erste Funksignale, die dem Kanalkontrollrahmen (CMF) entsprechen, die demselben Ausbreitungsweg wie das Empfangsquittierungssignal (ACK) gefolgt sind, markiert werden und wobei durch die erste Anlage zweite Empfangszeitpunkte zweiter Funksignale, die dem Rahmen entsprechen und die anderen Ausbreitungswegen zwischen den zwei Anlagen (1, 2) gefolgt sind, anhand verschiedener erster Empfangszeitpunkte markiert werden.

10. Funkkommunikationsanlage (1), die Mittel enthält zum Ausführen jener der Schritte des Verfahrens zum Messen des Abstandes zwischen zwei Anlagen nach einem der Ansprüche 1 bis 9, die durch die erste der zwei Anlagen ausgeführt werden.

11. Funkkommunikationsanlage (2), die Mittel enthält zum Ausführen jener der Schritte des Verfahrens zum Messen des Abstandes zwischen zwei Anlagen nach einem der Ansprüche 1 bis 9, die durch die zweite der zwei Anlagen ausgeführt werden.

12. Kommunikationssystem, das wenigstens eine Anlage (1) nach Anspruch 10 und eine Anlage (2) nach Anspruch 11 enthält.

FIG1.

# FIG.2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO O2063327 A